# EUROPEAN PATENT APPLICATION

(11) **EP 4 550 149 A1**
(43) Date of publication of application: **07.05.2025**
(21) Application number: 24199090.2
(22) Date of filing: 06.09.2024
(51) Int. Cl.: G06F 11/10

(54) **DATA PROTECTION METHOD AND APPARATUS, STORAGE MEDIUM, AND ELECTRONIC DEVICE**

(30) Priority: 25.09.2023 CN 202311246963
(71) Applicant: Beijing Horizon Information Technology Co., Ltd., Beijing 100094 (CN)
(72) Inventor: CHEN, Jiaqi, Beijing, 100094 (CN)
(74) Representative: Dehns Germany Partnerschaft mbB

(57) **Abstract**

A data protection method and apparatus, a storage medium, and an electronic device are disclosed. The data protection method includes: partitioning first to-be-protected data obtained by a chip, to obtain a plurality of first subdata; performing a predetermined check operation based on the plurality of first subdata, to obtain first check code corresponding to the first to-be-protected data, where the predetermined check operation is used for obtaining check code with a preset data volume for to-be-checked data with any data volume; determining first data protection reference information associated with the first check code; and storing the first to-be-protected data and the first data protection reference information into an on-chip memory of the chip. According to the embodiments of this disclosure, storage space and transmission bandwidth that need to be occupied for implementing data protection can be reduced.

## Description

### FIELD OF THE INVENTION

This disclosure relates to functional safety technologies, and in particular, to a data protection method and apparatus, a storage medium, and an electronic device.

### BACKGROUND OF THE INVENTION

Functional safety mechanisms are widely applied in chips, such as in in-vehicle chips. The functional safety mechanisms may include an FUSA safety mechanism (a road vehicle functional safety standard), and the in-vehicle chips may include an in-vehicle artificial intelligence (AI) chip.

The existing functional safety mechanisms generally perform data protection through error checking and correction (Error Correcting Code, ECC) verification operations.

### SUMMARY OF THE INVENTION

An existing functional safety mechanism performs data protection through ECC check operations, occupying a large amount of storage space and transmission bandwidth.

To resolve the foregoing technical problem, this disclosure provides a data protection method and apparatus, a storage medium, and an electronic device, to reduce storage space and transmission bandwidth that need to be occupied for implementing data protection.

According to an aspect of this disclosure, a data protection method is provided, including:
partitioning first to-be-protected data obtained by a chip, to obtain a plurality of first subdata;
performing a predetermined check operation based on the plurality of first subdata, to obtain first check code corresponding to the first to-be-protected data, wherein the predetermined check operation is used for obtaining check code with a preset data volume for to-be-checked data with any data volume;
determining first data protection reference information associated with the first check code; and
storing the first to-be-protected data and the first data protection reference information into an on-chip memory of the chip.

According to another aspect of this disclosure, a data protection apparatus is provided, including:
a data partitioning module, configured to partition first to-be-protected data obtained by a chip, to obtain a plurality of first subdata;
a first check operation module, configured to perform a predetermined check operation based on the plurality of first subdata obtained by the data partitioning module, to obtain first check code corresponding to the first to-be-protected data, wherein the predetermined check operation is used for obtaining check code with a preset data volume for to-be-checked data with any data volume;
a first determining module, configured to determine first data protection reference information associated with the first check code obtained by the first check operation module; and
a storage module, configured to store the first to-be-protected data and the first data protection reference information that is determined by the first determining module into an on-chip memory of the chip.

According to still another aspect of an embodiment of this disclosure, a computer readable storage medium is provided, wherein the storage medium stores a computer program, and the computer program is used for implementing the data protection method described above.

According to yet another aspect of an embodiment of this disclosure, an electronic device is provided, where the electronic device includes:
a processor; and
a memory, configured to store a processor-executable instruction, wherein
the processor is configured to read the executable instruction from the memory, and execute the instruction to implement the data protection method described above.

According to a still yet another aspect of an embodiment of this disclosure, a computer program product is provided. When instructions in the computer program product are executed by a processor, the data protection method described above is implemented.

According to the data protection method and apparatus, the storage medium, the electronic device, and the program product that are provided in the foregoing embodiments of this disclosure, to implement data protection for the first to-be-protected data obtained by the chip, the first to-be-protected data may be partitioned; the predetermined check operation may be performed based on the plurality of first subdata obtained through partitioning, to obtain the first check code; subsequently, the first data protection reference information associated with the first check code may be determined; and the first to-be-protected data and the first data protection reference information may be stored into the on-chip memory. Due to introduction of the predetermined check operation, regardless of the data volume of the first to-be-protected data, the data volume of the first check code is always the preset data volume. Correspondingly, the first data protection reference information associated with the first check code may also be maintained at a fixed data volume. In this way, an amount of data that needs to be stored in the on-chip memory is reduced, especially when the data volume of the first to-be-protected data is relatively large, thereby being beneficial for reducing storage space and transmission bandwidth that need to be occupied for implementing data protection.

### BRIEF DESCRIPTION OF THE DRAWINGS

FIG. 1 is a schematic flowchart of a data protection method according to some exemplary embodiments of this disclosure;
FIG. 2 is a diagram showing a comparison result of data expansion rates caused by a cyclic redundancy check operation and an ECC check operation according to some exemplary embodiments of this disclosure;
FIG. 3-1 is a schematic flowchart of a manner for obtaining first check code according to some exemplary embodiments of this disclosure;
FIG. 3-2 is a schematic flowchart of a manner for obtaining first check code according to some other exemplary embodiments of this disclosure;
FIG. 3-3 is a schematic flowchart of a manner for obtaining first data protection reference information according to some exemplary embodiments of this disclosure;
FIG. 4 is a schematic diagram of a data flow during calculations of a module 1 and a module 2 according to related technologies;
FIG. 5 is a schematic diagram of a data flow during calculations of a module 1 and a module 2 according to some exemplary embodiments of this disclosure;
FIG. 6 is a schematic flowchart of a manner for obtaining first check code according to still some other exemplary embodiments of this disclosure;
FIG. 7-1 is a schematic flowchart of a manner for implementing data protection according to some exemplary embodiments of this disclosure;
FIG. 7-2 is a diagram of a principle for implementing data protection according to some exemplary embodiments of this disclosure;
FIG. 8 is a schematic flowchart of a manner for storing first to-be-protected data according to some exemplary embodiments of this disclosure;
FIG. 9 is a schematic flowchart of a manner for obtaining a plurality of fourth subdata according to some exemplary embodiments of this disclosure;
FIG. 10 is a schematic flowchart of a manner for obtaining third check code according to some exemplary embodiments of this disclosure;
FIG. 11 is a schematic flowchart of a manner for processing a plurality of to-be-protected data to be used by a second module according to some embodiments of this disclosure;
FIG. 12 is a schematic diagram of a structure of a data protection apparatus according to some exemplary embodiments of this disclosure;
FIG. 13 is a schematic diagram of a structure of modules involved in implementing data protection according to some exemplary embodiments of this disclosure;
FIG. 14 is a schematic diagram of a structure of modules involved in processing a plurality of to-be-protected data to be used by a second module according to some embodiments of this disclosure; and
FIG. 15 is a diagram of a structure of an electronic device according to some exemplary embodiment of this disclosure.

### DETAILED DESCRIPTION OF THE EMBODIMENTS

To explain this disclosure, exemplary embodiments of this disclosure are described below in detail with reference to accompanying drawings. Obviously, the described embodiments are merely a part, rather than all of embodiments of this disclosure. It should be understood that this disclosure is not limited by the exemplary embodiments.

It should be noted that unless otherwise specified, the scope of this disclosure is not limited by relative arrangement, numeric expressions, and numerical values of components and steps described in these embodiments.

### Application overview

A basic principle of performing data protection by using a functional safety mechanism is to: calculate and store check code before to-be-protected data is stored in an on-chip memory of a chip; and after the to-be-protected data is read from the on-chip memory, calculate another check code. If the check code obtained through another calculation is same as the stored check code, it is determined that no error occurs in a process from storing to reading the to-be-protected data, or otherwise, it is determined that an error occurs in the process from storing to reading the to-be-protected data.

In related technologies, the check code is generally generated through an ECC check operation. In a process of implementing this disclosure, the inventor finds that the ECC check operation is calculated by using 256-bit data as a calculation unit. Through calculation, additional 10-bit data may be added to the original 256-bit data. In other words, the 256-bit data is expanded to 266-bit data. In this case, a data expansion rate caused by the ECC check operation is 10/255 ≈ 4%. In this way, when performing data protection by using the ECC check operation, a relatively large amount of data needs to be stored in the on-chip memory, which is particularly obvious when a data volume of the to-be-protected data is relatively large. As a result, a large amount of storage space and transmission bandwidth may be occupied.

### Exemplary system

Due to the foregoing shortcoming in performing data protection by using an ECC check operation, a predetermined check operation may be used for data protection in embodiments of this disclosure. Different from the ECC check operation, according to the predetermined check operation, it is possible to add data with fixed bits to entire to-be-protected data, such as 16-bit data, 32-bit data, or 64-bit data, instead of adding 10-bit data to each of 256-bit data. In this way, when performing data protection by using the predetermined check operation, an amount of data that needs to be stored in an on-chip memory is reduced, especially when a data volume of the to-be-protected data is relatively large, thereby being beneficial for reducing storage space and transmission bandwidth that need to be occupied for implementing data protection.

Optionally, the predetermined check operation may be a cyclic redundancy check (CRC) operation. Certainly, types of the predetermined check operation are not limited thereto. For example, the predetermined check operation may be a parity check operation, as long as the predetermined check operation satisfies the condition that fixed bit data is added to the entire to-be-protected data. The types of the predetermined check operation are not limited in this disclosure.

### Exemplary method

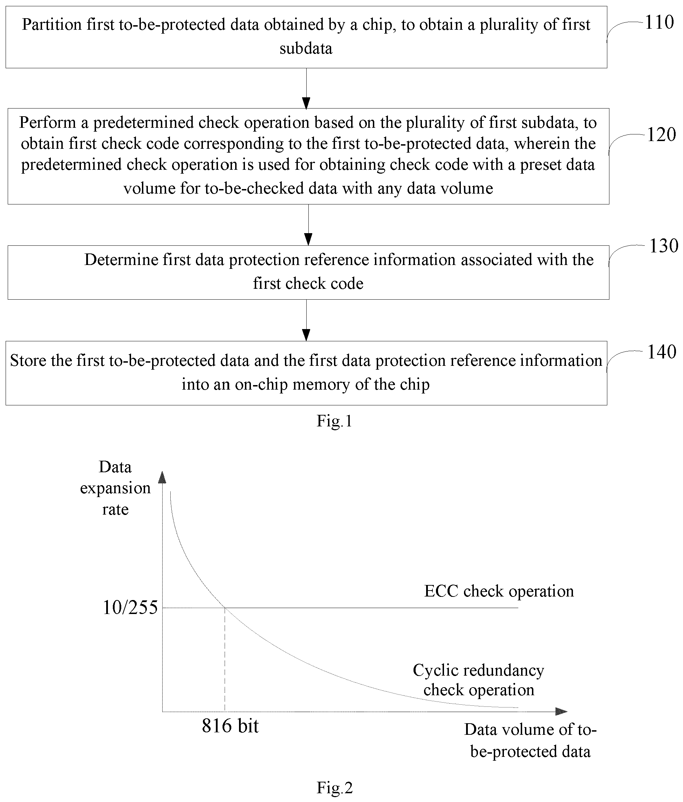

FIG. 1 is a schematic flowchart of a data protection method according to some exemplary embodiments of this disclosure. The method shown in FIG. 1 may include steps 110, 120, 130, and 140.

Step 110. Partition first to-be-protected data obtained by a chip, to obtain a plurality of first subdata.

It should be noted that the first to-be-protected data may be any data that requires data protection. The first to-be-protected data may be generated either by a module within the chip or by a module outside the chip. The first to-be-protected data may include, but is not limited to image data, voice data, point cloud data, and the like. The first to-be-protected data may be either compressed data or uncompressed data.

In step 110, the first to-be-protected data may be partitioned according to a preset partitioning rule, to obtain the plurality of first subdata. The preset partitioning rule may include, but is not limited to partitioning by rows, partitioning by blocks, and the like. For example, the first to-be-protected data may be image data that includes M rows and N columns of pixels, wherein each row in the M rows may be used as a first subdata. Thus, M pieces of first subdata may be obtained. For another example, the first to-be-protected data may be evenly partitioned into R blocks, and each block may be used as a first subdata. Thus, R first subdata may be obtained. Optionally, a data volume of each block may include, but is not limited to 8 bits, 12 bits, 16 bits, and the like.

Step 120. Perform a predetermined check operation based on the plurality of first subdata, to obtain first check code corresponding to the first to-be-protected data, wherein the predetermined check operation is used for obtaining check code with a preset data volume for to-be-checked data with any data volume (the to-be-checked data may refer to a plurality of first subdata to be checked).

For ease of understanding, description is made below by using an example in which the predetermined check operation is a cyclic redundancy check operation, and the preset data volume is 32 bits. In this way, a data volume of the first check code may be irrelevant to that of the first to-be-protected data, regardless of the data volume of the first to-be-protected data, the data volume of the first check code may be 32 bits. If it is assumed that the data volume of the first to-be-protected data is X bits, a data expansion rate caused by the cyclic redundancy check operation is X/32. In this case, for a comparison result of data expansion rates caused by the cyclic redundancy check operation and an ECC check operation, reference may be made to FIG. 2. It may be learned from FIG. 2 that, as long as X is greater than 816 bits, the data expansion rate caused by the cyclic redundancy check operation may be smaller than that caused by the ECC check operation. Moreover, 816 bits is a very small data volume, while X is usually greater than 816 bits. Therefore, for the first to-be-protected data, the data expansion rate caused by the cyclic redundancy check operation is smaller than that caused by the ECC check operation.

Optionally, a 32-bit CRC initial value may be configured according to actual conditions. For example, the CRC initial value may be configured to the following form: 11111111111111111111111111111111. For another example, the CRC initial value may be configured to the following form: 10101010101010101010101010101010.

If it is assumed that the plurality of first subdata are R first subdata, which are respectively represented as data₁, data₂, data₃, ..., data_{R-1}, and data_{R}, 32-bit CRC₁ may be obtained based on the data₁ and the CRC initial value through a cyclic redundancy check operation; and then, 32-bit CRC₂ may be obtained based on the data₂ and the CRC₁ through a cyclic redundancy check operation; subsequently, 32-bit CRC₃ may be obtained based on the datas and the CRC₂ through a cyclic redundancy check operation; ...; and finally, 32-bit CRC_{R} may be obtained based on the data_{R} and CRC_{R-1} through a cyclic redundancy check operation. The 32-bit CRC_{R} may be used as the first check code corresponding to the first to-be-protected data. Optionally, each of the CRC₁, the CRC₂, ..., and the CRC_{R-1} may be considered as intermediate check code generated in the process of obtaining the first check code through the cyclic redundancy check operation.

Step 130. Determine first data protection reference information associated with the first check code.

In step 130, the first check code may be directly used as the first data protection reference information. Alternatively, based on the first check code, the first data protection reference information may be obtained through encryption operations.

Step 140. Store the first to-be-protected data and the first data protection reference information into an on-chip memory of the chip.

Optionally, the on-chip memory may include, but is not limited to a double data rate (DDR) synchronous dynamic random access memory, a static random-access memory (SRAM), and the like.

In the embodiments of this disclosure, to implement data protection for the first to-be-protected data obtained by the chip, the first to-be-protected data may be partitioned; the predetermined check operation may be performed based on the plurality of first subdata obtained through partitioning, to obtain the first check code; subsequently, the first data protection reference information associated with the first check code may be determined; and the first to-be-protected data and the first data protection reference information may be stored into the on-chip memory. Due to introduction of the predetermined check operation, regardless of the data volume of the first to-be-protected data, the data volume of the first check code is always the preset data volume. Correspondingly, the first data protection reference information associated with the first check code may also be maintained at a fixed data volume. In this way, an amount of data that needs to be stored in the on-chip memory is reduced, especially when the data volume of the first to-be-protected data is relatively large, thereby being beneficial for reducing storage space and transmission bandwidth that need to be occupied for implementing data protection.

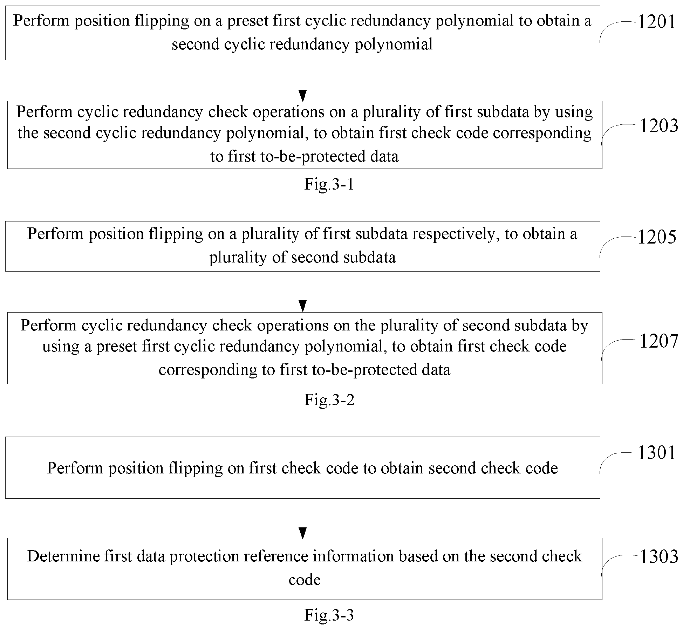

In some optional examples, as shown in FIG. 3-1, step 120 may include steps 1201 and 1203.

Step 1201. Perform position flipping on a preset first cyclic redundancy polynomial to obtain a second cyclic redundancy polynomial.

Optionally, the first cyclic redundancy polynomial may be a polynomial that is specified in the IEEE 802.3 standard (which belongs to the wired Ethernet standard for physical layers and data link layers) and is used for cyclic redundancy check operations. Certainly, according to actual conditions, another polynomial may also be selected as the first cyclic redundancy polynomial.

Assuming that the first cyclic redundancy polymer is represented in the following form: 0100110000010001110110110111, obviously, the first cyclic redundancy polymer involves 28 elements, which are arranged from front to back to form a sequence. In this case, this sequence may be rearranged from back to front to obtain another sequence. The another sequence may be represented in the following form: 1110110110111000100000110010; and may be used as the second cyclic redundancy polynomial.

Step 1203. Perform cyclic redundancy check operations on the plurality of first subdata by using the second cyclic redundancy polynomial, to obtain the first check code corresponding to the first to-be-protected data.

Referring to the relevant description about step 120 in the embodiments shown in FIG. 1, for the R first subdata, the first check code corresponding to the first to-be-protected data may be obtained by performing R cyclic redundancy check operations. Optionally, the second cyclic redundancy polynomial may be used in each one in the R cyclic redundancy check operations.

In some other optional examples, as shown in FIG. 3-2, step 120 may include steps 1205 and 1207.

Step 1205. Perform position flipping on the plurality of first subdata respectively, to obtain a plurality of second subdata.

It should be noted that a position flipping manner for a cyclic redundancy polynomial is introduced in the embodiments shown in FIG. 3-1. In step 1205, position flipping may be respectively performed on the plurality of first subdata according to the position flipping manner in the embodiments shown in FIG. 3-1, so as to obtain position flipping results in one-to-one correspondence to the plurality of first subdata. Each position flipping result may be used as a second subdata, and thus a plurality of second subdata may be obtained.

Step 1207. Perform cyclic redundancy check operations on the plurality of second subdata by using a preset first cyclic redundancy polynomial, to obtain the first check code corresponding to the first to-be-protected data.

If it is assumed that the plurality of first subdata are R first subdata, which are respectively represented as data₁, data₂, data₃, ..., data_{R-1}, and data_{R}, and the plurality of second subdata may be R pieces of second subdata, which are respectively represented as data₁', data₂', data₃', ..., data_{R-1}', and data_{R}, in step 120, 32-bit CRC₁' may be first obtained based on the data₁' and the CRC initial value by performing a cyclic redundancy check operation by using the first cyclic redundancy polynomial; and then, 32-bit CRC₂' may be obtained based on the data₂' and the CRC₁' by performing a cyclic redundancy check operation by using the first cyclic redundancy polynomial; subsequently, 32-bit CRC₃' may be obtained based on the data₃' and the CRC₂' by performing a cyclic redundancy check operation by using the first cyclic redundancy polynomial; ...; and finally, 32-bit CRC_{R}' may be obtained based on the data_{R}' and CRC_{R-1}' by performing a cyclic redundancy check operation by using the first cyclic redundancy polynomial. The 32-bit CRC_{R}' may be used as the first check code corresponding to the first to-be-protected data. Optionally, each of the CRC₁', the CRC₂', ..., and the CRC_{R-1}' may be considered as intermediate check code generated in the process of obtaining the first check code through the cyclic redundancy check operation.

Corresponding to the embodiments shown in FIG. 3-2, as shown in FIG. 3-3, step 130 may include steps 1301 and 1303.

Step 1301. Perform position flipping on the first check code to obtain second check code.

It should be noted that the position flipping manner for the cyclic redundancy polynomial is introduced in the embodiments shown in FIG. 3-1. In step 1301, position flipping may be performed on the first check code according to the position flipping manner in the embodiments shown in FIG. 2, and an obtained position flipping result may be used as the first check code.

Step 1303. Determine the first data protection reference information based on the second check code.

In step 1303, the second check code may be directly used as the first data protection reference information. Alternatively, the second check code may be encrypted, and an encryption result of the second check code may be used as the first data protection reference information.

It may be learned from the section of application overview that, to protect the first to-be-protected data, the predetermined check operation needs to be performed before the first to-be-protected data is stored in the on-chip memory, and also needs to be performed after the first to-be-protected data is read from the on-chip memory. Assuming that a module that performs the predetermined check operation before the first to-be-protected data is stored in the on-chip memory is a module 1 in the chip, and a module that performs the predetermined check operation after the first to-be-protected data is read from the on-chip memory is a module 2 in the chip, during the cyclic redundancy check operation, data volumes that can be calculated by the module 1 and the module 2 in a single time are usually different. For example, the data volume that can be calculated by the module 1 in a single time is 64 bits (that is, 8 bytes, which may also be represented as 8B), the data volume that can be calculated by the module 2 in a single time is 256 bits (that is, 32 bytes, which may also be represented as 32B).

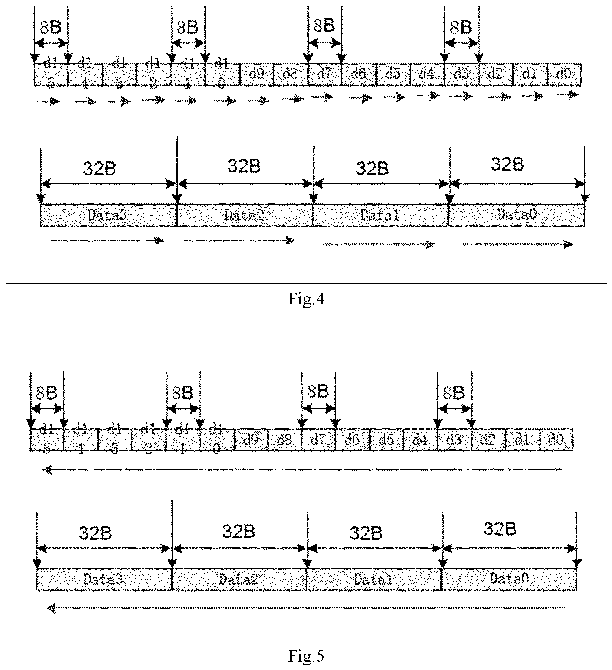

In related technologies, as shown in FIG. 4, a calculation order of the module 1 may be: d0 → d1 → d2 → d3 - d14 - d15. For each of d0 to d15, calculations are performed from a high to low. A data volume for each of d0 to d15 is 8B. A calculation order of the module 2 may be: Data 0 - Data 1 - Data 2 - Data 3. For each of Data 0 to Data 3, calculations are performed from high to low. A data volume for each of Data 0 to Data 3 is 32B. Obviously, a data flow during the calculation of the module 1 is inconsistent with that during the calculation of the module 2. For example, the module 1 starts calculation from a most significant bit in d0, while the module 2 starts calculation from a most significant bit in Data 0. The two bits are obviously not aligned. Due to the inconsistent data flows, although same to-be-protected data is given, different check code is calculated by the module 1 and the module 2. This may affect correct implementation of data protection.

On this basis, in the embodiments of this disclosure, position flipping may be performed on the plurality of first subdata, and position flipping may be performed on the first check code. To be specific, in a calculation phase before the first to-be-protected data is stored in the on-chip memory, position flipping may be performed separately for input and output of the cyclic redundancy check operation. Similarly, in a calculation phase after the first to-be-protected data is read from the on-chip memory, position flipping may also be performed separately for the input and the output of the cyclic redundancy check operation. In this way, as shown in FIG. 5, the calculation order of the module 1 may be: d0 → d1 → d2 → d3 →... - d14 - d15, and for each of d0 to d15, calculations are performed from low to high; and the calculation order of the module 2 may be: Data 0 - Data 1 - Data 2 → Data 3, and for each of Data 0 to Data 3, calculations are performed from low to high. Therefore, the data flow during the calculation of the module 1 can be kept consistent with the data flow during the calculation of the module 2, thereby preventing the inconsistent data flows from affecting the correct implementation of data protection.

It should be noted that the inventor find through experiments that, effects of performing position flipping on a cyclic redundancy polynomial used during the cyclic redundancy check operation are equivalent to those of performing position flipping on the input and the output of the cyclic redundancy check operation (corresponding to the embodiments shown in FIG. 3-2 and FIG. 3-3). Therefore, according to the embodiments shown in FIG. 3-1, the data flow during the calculation of the module 1 can also be kept consistent with the data flow during the calculation of the module 2, thereby preventing the inconsistent data flows from affecting the correct implementation of data protection.

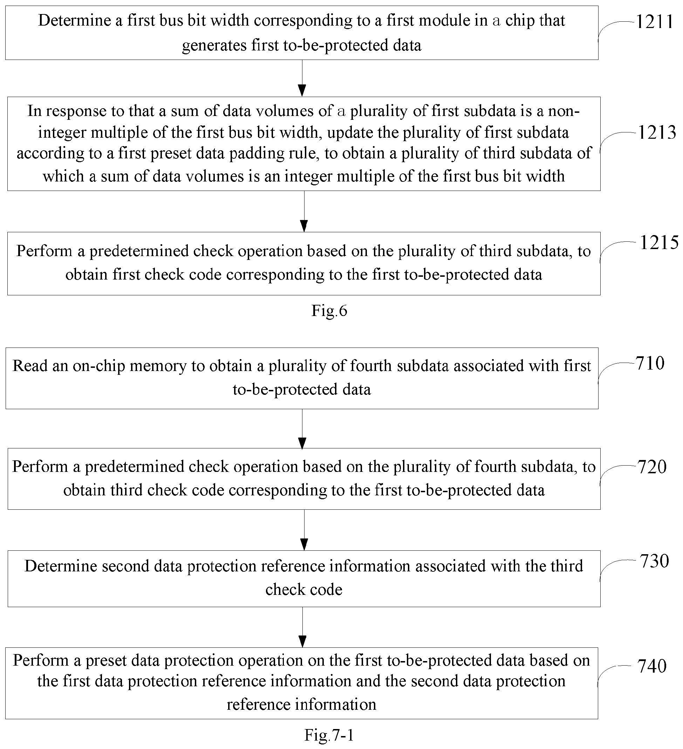

In some optional examples, as shown in FIG. 6, step 120 may include steps 1211, 1213, and 1215.

Step 1211. Determine a first bus bit width corresponding to a first module in the chip that generates the first to-be-protected data.

Optionally, the first module may be a camera subsystem, the first to-be-protected data may be image data, and the first bus bit width corresponding to the first module may be 128 bits. Certainly, the first module is not limited to the camera subsystem. For example, the first module may also be a voice collection module, and correspondingly, the first to-be-protected data may be voice data. It should be noted that the first module may be used as the module 1 described above.

Optionally, in step 110 in this disclosure, computing power information of the first module may be determined, and the first to-be-protected data may be partitioned according to the computing power information of the first module, to obtain the plurality of first subdata. For example, the first module only supports predetermined check operations for 16-bit data each time. In this case, during partitioning of the first to-be-protected data, a data volume of each of first subdata obtained through partitioning may be 16 bits.

Step 1213. In response to that a sum of data volumes of the plurality of first subdata is a non-integer multiple of the first bus bit width, update the plurality of first subdata according to a first preset data padding rule, to obtain a plurality of third subdata of which a sum of data volumes is an integer multiple of the first bus bit width.

Optionally, the first preset data padding rule may include any one of the following: adding 0s to mantissas for alignment; adding 1s to mantissas for alignment; and alternatively adding 1s and 0s to mantissas for alignment.

In step 1213, the sum of the data volumes of the plurality of first subdata may be counted, and it may be determined whether the counted sum of the data volumes may be divided by the first bus bit width with no remainder. If not, it may be determined that the counted sum of the data volumes is a non-integer multiple of the first bus bit width. In this case, based on the plurality of first subdata, data padding may be performed according to the first preset data padding rule, so as to obtain the plurality of third subdata of which the sum of the data volumes is an integer multiple of the first bus bit width.

In an optional example, the first bus bit width may be 128 bits, the plurality of first subdata may be R first subdata, and the data volume of each of first subdata may be 16 bits. In this case, a total number of bits of the plurality of first subdata may be expressed as SUM=16*R. If the SUM cannot be divided by 128 with no remainder, SUM/128 may be rounded up to obtain a rounded value Z. Based on the R first subdata, 128*Z-SUM 0s may be added according to the rule of adding 0s to mantissas for alignment, to obtain a plurality of third subdata. A data volume of each one in the plurality of third subdata may be 16 bits, and a total number of bits of the plurality of third subdata may be 128*Z.

Step 1215. Perform a predetermined check operation based on the plurality of third subdata, to obtain the first check code corresponding to the first to-be-protected data.

In step 1215, cyclic redundancy check operations may be performed on the plurality of third subdata by using the second cyclic redundancy polynomial, to obtain the first check code. Alternatively, position flipping may be respectively performed on the plurality of third subdata to obtain a plurality of corresponding position flipping results, and cyclic redundancy check operations may be performed on the plurality of position flipping results by using the first cyclic redundancy polynomial, to obtain the first check code.

It should be noted that the data volume of the first to-be-protected data generated by the first module may be random, and it is generally difficult for hardware (such as the module 2 described above) to support the cyclic redundancy check operation with any length through parameterized configuration. On this basis, in the embodiments of this disclosure, data padding may be performed on the plurality of first subdata according to the first bus bit width corresponding to the first module. A total number of bits of the data padding result (that is, the plurality of third subdata) may match the first bus bit width. For example, the first bus bit width may be 128 bits, which may be consistent with a length supported by the module 2, or may be a number of bits that helps the module 2 to align the data to the length supported thereby. In this way, subsequent cyclic redundancy check operations of the module 2 can be facilitated, thereby implementing data protection for the first to-be-protected data.

In some optional examples, as shown in FIG. 7-1, the method provided in the embodiments of this disclosure may further include steps 710, 720, 730, and 740.

Step 710. Read the on-chip memory to obtain a plurality of fourth subdata associated with the first to-be-protected data.

Optionally, in step 140, the first to-be-protected data may be stored in a certain storage area in the on-chip memory, which may be represented as a storage area Q. If the module 2 needs to use the first to-be-protected data, the module 2 may read data from the storage area Q. If it is assumed that a bus bit width corresponding to the module 2 is 256 bits, the module 2 may read 256-bit data each time through a bus. The 256-bit data may be used as a fourth subdata associated with the first to-be-protected data. In this way, by reading multiple times, the module 2 may obtain a plurality of fourth subdata. The plurality of fourth subdata may be considered as a result obtained by the module 2 by reading the first to-be-protected data stored in the on-chip memory.

Step 720. Perform the predetermined check operation based on the plurality of fourth subdata, to obtain third check code corresponding to the first to-be-protected data.

In step 720, cyclic redundancy check operations may be performed on the plurality of fourth subdata by using the second cyclic redundancy polynomial, to obtain the third check code. Alternatively, position flipping may be respectively performed on the plurality of fourth subdata to obtain a plurality of corresponding position flipping results, and cyclic redundancy check operations may be performed on the plurality of position flipping results by using the first cyclic redundancy polynomial, to obtain the third check code.

Step 730. Determine second data protection reference information associated with the third check code.

In step 720, if the third check code is obtained by using the second cyclic redundancy polynomial, in step 730, the third check code may be determined as the second data protection reference information. Alternatively, the third check code may be encrypted, and an encryption result of the third check code may be used as the second data protection reference information.

In step 720, if the third check code is obtained by using the first cyclic redundancy polynomial, in step 730, position flipping may be performed on the third check code, and the second data protection reference information may be determined based on an obtained position flipping result. For example, the position flipping result may be used as the second data protection reference information. Alternatively, the position flipping result may be encrypted, and an encryption result of the position flipping result may be used as the second data protection reference information.

Step 740. Perform a preset data protection operation on the first to-be-protected data based on the first data protection reference information and the second data protection reference information.

In step 740, it may be determined whether the first data protection reference information and the second data protection reference information are the same.

If the first data protection reference information is same as the second data protection reference information, it may be considered that no error occurs in a process from storing to reading the first to-be-protected data. In this case, a second module may use the first to-be-protected data normally.

If the first data protection reference information is different from the second data protection reference information, it may be considered that an error occurs in the process from storing to reading the first to-be-protected data. In this case, the preset data protection operation may be performed on the first to-be-protected data. For example, data in the storage area Q may be discarded. Alternatively, instructions may be sent to the first module, so as to instruct the first module to perform data generation again.

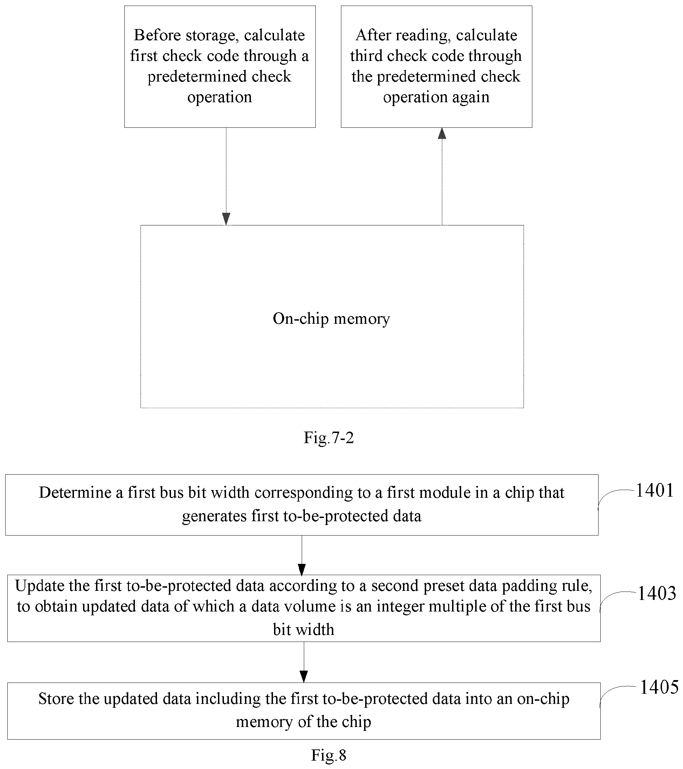

In the embodiments of this disclosure, as shown in FIG. 7-2, before the first to-be-protected data is stored in the on-chip memory, the first check code may be calculated through the predetermined check operation, and the first data protection reference information associated with the first check code may be determined. After the first to-be-protected data stored in the on-chip memory is read, the third check code may be calculated through the predetermined check operation again, and the second data protection reference information associated with the third check code may be determined. By comparing the second data protection reference information with the first data protection reference information, whether an error occurs in the process from storing to reading the first to-be-protected data may be efficiently and reliably determined. For a situation where an error occurs, corresponding processing operations may be performed, thus effectively implementing data protection through the introduction of the predetermined check operation.

In some optional examples, as shown in FIG. 8, step 140 may include steps 1401, 1403, and 1405.

Step 1401. Determine a first bus bit width corresponding to a first module in the chip that generates the first to-be-protected data.

It should be noted that, for specific implementation of step 1401, reference may be made to the relevant description in step 1211, and details are not described herein again.

Step 1403. Update the first to-be-protected data according to a second preset data padding rule, to obtain updated data of which a data volume is an integer multiple of the first bus bit width.

Optionally, the second preset data padding rule may include any one of the following: adding 0s to mantissas for alignment; adding 1s to mantissas for alignment; and alternatively adding 1s and 0s to mantissas for alignment.

It should be noted that the second preset data padding rule and the first preset data padding rule may be either same rules or different rules. For the data padding manner in step 1403, reference may be made to the relevant description in step 1213, and details are not described herein again.

Step 1405. Store the updated data including the first to-be-protected data into the on-chip memory of the chip.

Optionally, the updated data including the first to-be-protected data may be stored in the foregoing storage area Q.

In the embodiments of this disclosure, the first to-be-protected data is updated according to the second preset data padding rule, so that the updated data of which a data volume matches the first bus bit width may be obtained, which may facilitate transmission of the updated data, thereby facilitating storage of the updated data in the on-chip memory.

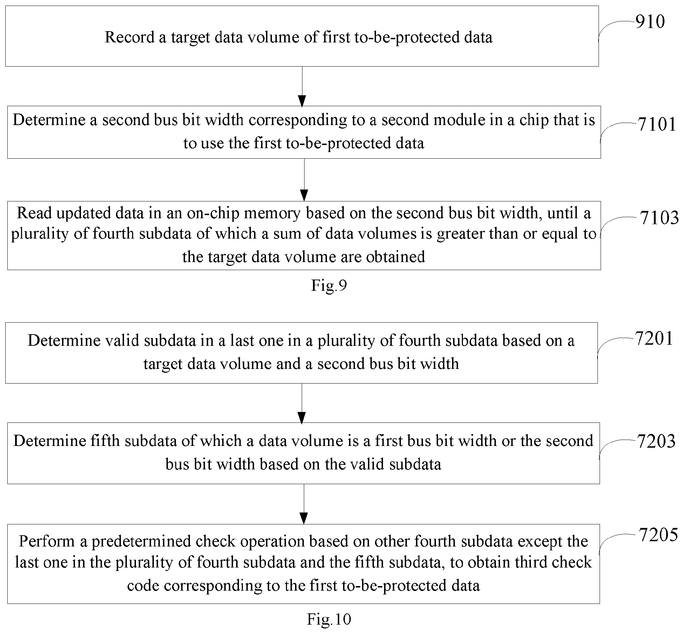

In some optional examples, as shown in FIG. 9, the method provided in the embodiments of this disclosure may further include step 910.

Step 910. Record a target data volume of the first to-be-protected data.

Optionally, the target data volume may be the X described above.

Step 710 includes steps 7101 and 7103.

Step 7101. Determine a second bus bit width corresponding to a second module in the chip that is to use the first to-be-protected data.

Optionally, the second module may be a module in a neural network accelerator (BPU) of the chip. The second module may be used as the module 2 described above. The second bus bit width corresponding to the second module may be different from the first bus bit width corresponding to the first module. For example, the first bus bit width may be 128 bits, and the second bus bit width may be 256 bits.

Step 7103. Read the updated data in the on-chip memory based on the second bus bit width, until a plurality of fourth subdata of which a sum of data volumes is greater than or equal to the target data volume are obtained.

In step 7103, the second module may read data from the storage area Q, and 256-bit data may be read each time. The 256-bit data may be used as a fourth subdata. During the reading process, the second module may determine whether the sum of the data volumes obtained through reading is greater than or equal to the target data volume. If the sum of the data volumes obtained through reading is less than the target data volume, the second module may continue reading. If the sum of the data volumes obtained through reading is greater than or equal to the target data volume, the second module may end the reading.

In the embodiments of this disclosure, by recording the target data volume of the first to-be-protected data, the second module may end data reading at an appropriate time, which facilitates fully reading of required data, thereby avoiding reading of invalid data as much as possible.

In some optional examples, the sum of the data volumes of the plurality of fourth subdata may be greater than the target data volume.

As shown in FIG. 10, step 720 may include steps 7201, 7203, and 7205.

Step 7201. Determine valid subdata in a last one in the plurality of fourth subdata based on the target data volume and the second bus bit width.

It should be noted that each one in the plurality of fourth subdata may be read at different time. The last one in the plurality of fourth subdata may refer to a fourth subdata with latest reading time.

Optionally, the data volume of each one in the plurality of fourth subdata may be consistent with the second bus bit width. For example, the data volumes all are 256 bits. If it is assumed that the plurality of fourth subdata are U fourth subdata, a total number of bits of data volumes of U-1 fourth subdata except the last one in the plurality of fourth subdata may be 256*(U-1). If it is assumed that the target data volume is represented as X, a valid data volume in the last fourth subdata may be X-256*(U-1). In this case, only first X-256*(U-1) bits in the last fourth subdata are valid. On this basis, the last fourth subdata may be truncated to obtain the valid subdata in the last fourth subdata.

Step 7203. Determine fifth subdata of which a data volume is the first bus bit width or the second bus bit width based on the valid subdata.

In some optional implementations of this disclosure, step 7203 includes:
in response to that a data volume of the valid subdata is greater than the first bus bit width and is less than the second bus bit width, updating the valid subdata according to a first preset data padding rule, to obtain the fifth subdata of which the data volume is the second bus bit width; and
in response to that the data volume of the valid subdata is less than the first bus bit width, updating the valid subdata according to the first preset data padding rule, to obtain the fifth subdata of which the data volume is the first bus bit width.

As shown in the foregoing examples, the first bus bit width may be 128 bits, the second bus bit width may be 256 bits, and a total number of bits of the data volume of the valid subdata may be X-256*(U-1). If X-256*(U-1) is greater than 128 and is less than 256, fifth subdata with a data volume of 256 bits may be obtained based on the valid subdata by means of adding 0s to mantissas for alignment. If X-256*(U-1) is less than 128, fifth subdata with a data volume of 128 bits may be obtained based on the valid sub data by means of adding 0s to mantissas for alignment.

In this way, a bit width range with the first bus bit width as a left endpoint and the second bus bit width as a right endpoint may be considered as a reference range. Referring to distribution of the data volume of the valid subdata relative to the reference range, data padding may be reasonably performed on the valid subdata to obtain the fifth subdata with a corresponding data volume.

Step 7205. Perform the predetermined check operation based on other fourth subdata except the last one in the plurality of fourth subdata and the fifth subdata, to obtain the third check code corresponding to the first to-be-protected data.

In some optional implementations of this disclosure, a first check calculation component supporting the first bus bit width and a second check calculation component supporting the second bus bit width may be instantiated in the second module.

Step 7205 may include:
in response to that a data volume of the fifth subdata is the second bus bit width, performing the predetermined check operation by using the second check calculation component based on the other fourth subdata except the last one in the plurality of fourth subdata and the fifth subdata, to obtain the third check code corresponding to the first to-be-protected data; and
in response to that the data volume of the fifth subdata is the first bus bit width, performing the predetermined check operation by using the second check calculation component based on the other fourth subdata except the last one in the plurality of fourth subdata, to obtain first intermediate check code, and performing the predetermined check operation by using the first check calculation component based on the fifth subdata and the first intermediate check code, to obtain the third check code corresponding to the first to-be-protected data.

As shown in the foregoing examples, the first bus bit width may be 128 bits, the second bus bit width may be 256 bits, the data volume of each of fourth subdata may be 256 bits, and the plurality of fourth subdata may be U pieces of fourth subdata. If it is assumed that the U fourth subdata are respectively represented as data₁", data₂", data₃", ..., data_{U-1}", and datau", 32-bit CRC₁" may be obtained based on the data₁" and the CRC initial value by performing a cyclic redundancy check operation by using the second check calculation component; and then, 32-bit CRC₂" may be obtained based on the data₂" and the CRC₁" by performing a cyclic redundancy check operation by using the second check calculation component; subsequently, 32-bit CRC₃" may be obtained based on the data₃" and the CRC₂" by performing a cyclic redundancy check operation by using the second check calculation component; ...; and finally, if the data volume of the fifth subdata is 256 bits, 32-bit CRC_{U}" may be obtained based on the fifth subdata and CRC_{U-1}" by performing a cyclic redundancy check operation by using the second check calculation component. The 32-bit CRC_{U}" may be used as the third check code corresponding to the first to-be-protected data. Moreover, if the data volume of the fifth subdata is 128 bits, 32-bit CRC_{U}" may be obtained based on the fifth subdata and the CRC_{U-1}" (which is equivalent to the first intermediate check code) by performing a cyclic redundancy check operation by using the first check calculation component. The 32-bit CRCu'" may be used as the third check code corresponding to the first to-be-protected data.

In this way, the predetermined check operation may be performed on the other fourth subdata except the last one in the plurality of fourth subdata by using the second check calculation component; and an appropriate check calculation component may be selected from the first check calculation component and the second check calculation component based on the data volume of the fifth subdata, to perform the predetermined check operation on the fifth subdata. This helps to ensure reliability of the third check code that is finally obtained.

Certainly, during specific implementation, in step 7203, the fifth subdata of which the data volume is the second bus bit width may be obtained by directly updating the valid subdata, without considering the distribution of the data volume of the valid subdata relative to the reference range. Correspondingly, in the second module, there is no need to instantiate the first check calculation component, but only instantiate the second check calculation component. In this way, in step 7205, the predetermined check operation may be performed by using the second check calculation component based on the other fourth subdata except the last one in the plurality of fourth subdata and the fifth subdata, to obtain the third check code corresponding to the first to-be-protected data.

In the embodiments of this disclosure, referring to the target data volume and the second bus bit width, the valid subdata in the last one in the plurality of fourth subdata may be obtained efficiently and reliably through truncation. Based on the valid subdata, the fifth subdata may be obtained efficiently and reliably through data padding. Performing the predetermined check operation based on the other fourth subdata except the last one in the plurality of fourth subdata and the fifth subdata is equivalent to performing the predetermined check operation in a calculation phase after the first to-be-protected data is read from the on-chip memory, so that data protection is completely implemented for the first to-be-protected data.

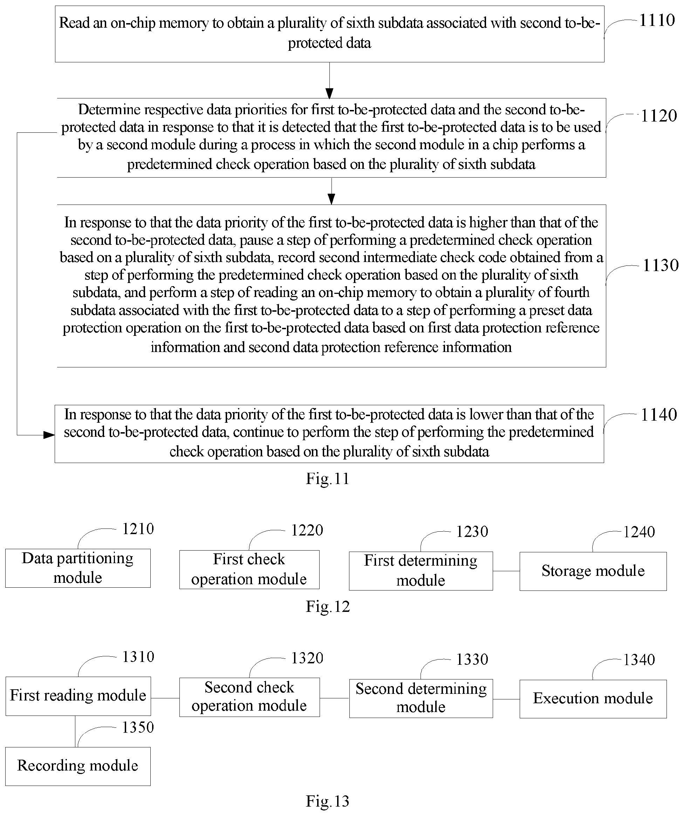

In some optional examples, as shown in FIG. 11, the method provided in the embodiments of this disclosure may further include steps 1110, 1120, 1130, and 1140.

Step 1110. Read the on-chip memory to obtain a plurality of sixth subdata associated with second to-be-protected data.

It should be noted that the second to-be-protected data may be any data that is different from the first to-be-protected data and requires data protection. For specific implementation of step 1110, reference may be made to the relevant description in step 710, and details are not described herein again.

Step 1120. Determine data priorities for the first to-be-protected data and the second to-be-protected data in response to that it is detected that the first to-be-protected data is to be used by the second module during a process in which the second module in the chip performs the predetermined check operation based on the plurality of sixth subdata.

Optionally, a corresponding relationship between a data type and the data priority may be preset, and the data priority may be represented by using a level number. In this way, in step 1120, data types of the first to-be-protected data and the second to-be-protected data may be determined. Further, in combination with the preset corresponding relationship, the data priorities of the first to-be-protected data and the second to-be-protected data may be determined. Certainly, determining of the data priorities is not limited to the data types. For example, data usage frequency and the like may also be included.

Step 1130. In response to that the data priority of the first to-be-protected data is higher than that of the second to-be-protected data, pause the step of performing the predetermined check operation based on the plurality of sixth subdata, record second intermediate check code obtained from the step of performing the predetermined check operation based on the plurality of sixth subdata, and perform the step of reading the on-chip memory to obtain a plurality of fourth subdata associated with the first to-be-protected data to the step of performing the preset data protection operation on the first to-be-protected data based on the first data protection reference information and the second data protection reference information.

Step 1140. In response to that the data priority of the first to-be-protected data is lower than that of the second to-be-protected data, continue to perform the step of performing the predetermined check operation based on the plurality of sixth subdata.

It should be noted that, for a specific implementation manner of performing the predetermined check operation based on the plurality of sixth subdata, reference may be made to the foregoing discretion of the specific implementation manner of performing the predetermined check operation based on the plurality of first subdata. For a manner of obtaining the second intermediate check code, reference may also be made to the relevant description about the intermediate check code generated in the process of obtaining the first check code through the cyclic redundancy check operation. Details are not described herein again.

If the data priority of the first to-be-protected data is higher than that of the second to-be-protected data, the predetermined check operation for the second to-be-protected data may be paused, and an intermediate operation result (that is, the second intermediate check code) of the second to-be-protected data may be recorded. For example, the intermediate operation result of the second to-be-protected data is recorded in a register, and then the predetermined check operation is performed on the first to-be-protected data. After the predetermined check operation for the first to-be-protected data is completed, the predetermined check operation is continued from a position where the predetermined check operation for the second to-be-protected data is paused.

If the data priority of the first to-be-protected data is lower than that of the second to-be-protected data, the predetermined check operation for the second to-be-protected data may be continued, and the predetermined check operation may be performed on the first to-be-protected data after the predetermined check operation for the second to-be-protected data is completed.

In the embodiments of this disclosure, for a case where the second module needs to use a plurality of to-be-protected data, the predetermined check operation may be preferentially performed on the to-be-protected data with a higher data priority, so that the second module can subsequently use the to-be-protected data as soon as possible. For the to-be-protected data with a lower data priority, a pause mechanism may be used to pause the predetermined check operation therefor, and an intermediate operation result may be recorded. Subsequently, operations may be continued from a position of pause, without starting from the beginning, which helps to save computing resources.

In some optional examples,
determining the first data protection reference information associated with the first check code includes:
performing an XOR operation between the first check code and preset data, to obtain the first data protection reference information; and
determining the second data protection reference information associated with the third check code includes:
performing an XOR operation between the third check code and the preset data, to obtain the second data protection reference information.

Optionally, if a data volume of check code generated through the predetermined check operation may be 32 bits, the preset data may be 32-bit data. The preset data may be configured according to actual requirements. For example, each bit in the 32-bit data that serves as the preset data may be 0 or 1.

In the embodiments of this disclosure, the XOR operation may be performed between the first check code and the preset data to obtain an XOR operation result, which may be directly used as the first data protection reference information. The first data protection reference information may be considered as an encryption result obtained by encrypting the first check code. By storing the encryption result into the on-chip memory, data security may be improved through an encryption mechanism. In the following, the second data protection reference information may be obtained according to a similar manner. By comparing the second data protection reference information with the first data protection reference information to determine whether the two are the same, it may be determined which processing operation is to be performed on the first to-be-protected data. Thus, data protection can be effectively implemented for the first to-be-protected data.

In some optional examples, considering that some of the to-be-protected data is not suitable for data protection by using the predetermined check operation, the on-chip memory may be partitioned to obtain a first partition and a second partition. For to-be-protected data that is suitable for data protection by using the predetermined check operation, the predetermined check operation may be performed on the to-be-protected data to obtain check code, and the to-be-protected data and the check code may be stored in the first partition. For the to-be-protected data that is not suitable for data protection by using the predetermined check operation, an ECC check operation may be performed on the to-be-protected data to obtain check code, and the to-be-protected data and the check code may be stored in the second partition. In this way, data protection may be flexibly performed on the to-be-protected data according to actual conditions.

In some optional examples, the module 1 described above may be a front-level camera subsystem in the chip, and the module 2 described above may be a rear-level load module in the chip. After image data (equivalent to the first to-be-protected data described above) is generated by the front-level camera subsystem, the image data may be partitioned into multiple blocks and be aligned to 128 bits by means of adding 0s to mantissas. A CRC check operation is performed on an alignment result to obtain the first check code, and both the image data and the first check code may be stored in the DDR. The rear-level load module may read data from the DDR after obtaining instructions, and perform a CRC check operation on a read result to obtain the third check code. If the first check code is same as the third check code, it indicates that no error occurs in a process of transmitting the image data from the front-level camera subsystem to the DDR and then to the rear-level load module. If the first check code is different from the third check code, it indicates that there is an error in the image data during transmission or during DDR reading and writing.

It should be noted that the front-level camera subsystem may be calculated in a manner of blocks, with a calculation unit of 8 bits, 12 bits, or 16 bits; while a calculation unit of the rear-level load module may be 256 bits or 128 bits. To ensure consistent data flows during calculation of a front-level module and a rear-level module, position flipping needs to be performed on input for calculation of each block, and position flipping also needs to be performed on a calculation result of a last block (corresponding to the embodiments shown in FIG. 3-2 and FIG. 3-3). Alternatively, to ensure consistent data flows during the calculation of the front-level module and the rear-level module, position flipping may also be performed on a cyclic redundancy polynomial used in CRC check operation (corresponding to the embodiments shown in FIG. 3-1).

In addition, when the rear-level load module needs to use a plurality of image data, the CRC check operation may be preferentially performed on the image data with a higher data priority, while the CRC check operation may be paused for the image data with a lower data priority. Thus, different image data may be loaded alternately.

In some other optional examples, the module 1 described above may be a front-level store module in the chip, and the module 2 described above may be a rear-level load module in the chip. The front-level store module may compress data in L1M (a level-1 cache) (compressed data may be used as the first to-be-protected data described above). After the compressed data is aligned to 256 bits by means of adding 0s to mantissas, the CRC check operation may be performed on the compressed data to obtain the first check code. Moreover, the first check code is placed in a header file of the compressed data, and the compressed data added with the first check code is saved in the DDR. The rear-level load module may extract data from the DDR. After the extracted data is decompressed, the CRC check operation may be performed on the same to obtain the third check code, which is compared with the first check code in the header file. If the first check code is same as the third check code, it indicates that no error occurs in a process of transmitting the compressed data from the front-level store module to the DDR and then to the rear-level load module. If the first check code is different from the third check code, it indicates that there is an error in the compressed data during transmission or during DDR reading and writing.

In view of the above, in the embodiments of this disclosure, data protection can be effectively implemented through the introduction of the predetermined check operation, thereby reducing occupation of storage space and transmission bandwidth as possible.

### Exemplary apparatus

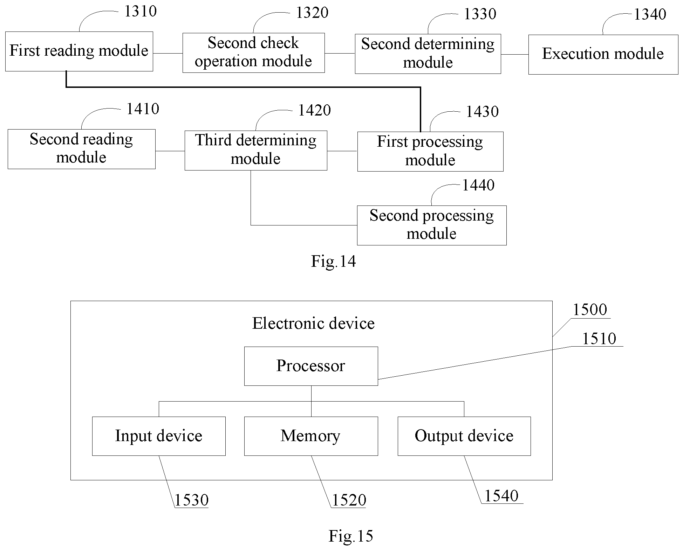

FIG. 12 is a schematic diagram of a structure of a data protection apparatus according to some exemplary embodiments of this disclosure. The apparatus shown in FIG. 14 includes:
a data partitioning module 1210, configured to partition first to-be-protected data obtained by a chip, to obtain a plurality of first subdata;
a first check operation module 1220, configured to perform a predetermined check operation based on the plurality of first subdata obtained by the data partitioning module 1210, to obtain first check code corresponding to the first to-be-protected data, where the predetermined check operation is used for obtaining check code with a preset data volume for to-be-checked data with any data volume;
a first determining module 1230, configured to determine first data protection reference information associated with the first check code obtained by the first check operation module 1220; and
a storage module 1240, configured to store the first to-be-protected data and the first data protection reference information that is determined by the first determining module 1230 into an on-chip memory of the chip.

In some optional examples, the first check operation module 1220 includes:
a first position flipping submodule, configured to perform position flipping on the plurality of first subdata obtained by the data partitioning module 1210 respectively, to obtain a plurality of second subdata; and
a first check operation submodule, configured to perform cyclic redundancy check operations on the plurality of second subdata obtained by the first position flipping submodule by using a preset first cyclic redundancy polynomial, to obtain the first check code corresponding to the first to-be-protected data.

The first determining module 1230 includes:
a second position flipping submodule, configured to perform position flipping on the first check code obtained by the first check operation submodule, to obtain second check code; and
a first determining submodule, configured to determine first data protection reference information based on the second check code obtained by the second position flipping submodule.

In some optional examples, the first check operation module 1220 includes:
a third position flipping submodule, configured to perform position flipping on the preset first cyclic redundancy polynomial to obtain a second cyclic redundancy polynomial; and
a second check operation submodule, configured to perform cyclic redundancy check operations on the plurality of first subdata obtained by the data partitioning module 1210 by using the second cyclic redundancy polynomial obtained by the third position flipping submodule, to obtain the first check code corresponding to the first to-be-protected data.

In some optional examples, the first check operation module 1220 includes:
a second determining submodule, configured to determine a first bus bit width corresponding to a first module in the chip that generates the first to-be-protected data;
a first update submodule, configured to update the plurality of first subdata obtained by the data partitioning module 1210 according to a first preset data padding rule in response to that a sum of data volumes of the plurality of first subdata obtained by the data partitioning module 1210 is a non-integer multiple of the first bus bit width determined by the second determining submodule, to obtain a plurality of third subdata of which a sum of data volumes is an integer multiple of the first bus bit width determined by the second determining submodule; and
a third check operation submodule, configured to perform a predetermined check operation based on the plurality of third subdata obtained by the first update module, to obtain the first check code corresponding to the first to-be-protected data.

In some optional examples, as shown in FIG. 13, the apparatus provided in the embodiments of this disclosure further includes:
a first reading module 1310, configured to read the on-chip memory to obtain a plurality of fourth subdata associated with the first to-be-protected data;
a second check operation module 1320, configured to perform the predetermined check operation based on the plurality of fourth subdata obtained by the first reading module 1310, to obtain third check code corresponding to the first to-be-protected data;
a second determining module 1330, configured to determine second data protection reference information associated with the third check code obtained by the second check operation module 1320; and
an execution module 1340, configured to perform a preset data protection operation on the first to-be-protected data based on the first data protection reference information and the second data protection reference information that is determined by the second determining module 1330.

In some optional examples, a storage module 1240 includes:
a third determining submodule, configured to determine a first bus bit width corresponding to a first module in the chip that generates the first to-be-protected data;
a second update submodule, configured to update the first to-be-protected data according to a second preset data padding rule, to obtain updated data of which a data volume is an integer multiple of the first bus bit width determined by the third determining submodule; and
a storage submodule, configured to store the updated data including the first to-be-protected data that is obtained by the second update submodule into the on-chip memory of the chip.

In some optional examples, as shown in FIG. 13, the apparatus provided in the embodiments of this disclosure further includes:
a recording module 1350, configured to record a target data volume of the first to-be-protected data.

The first reading module 1310 includes:
a fourth determining submodule, configured to determine a second bus bit width corresponding to a second module in the chip that is to use the first to-be-protected data; and
a reading submodule, configured to read the updated data in the on-chip memory based on the second bus bit width determined by the fourth determining submodule, until a plurality of fourth subdata of which a sum of data volumes is greater than or equal to the target data volume recorded by the recording module 1350 are obtained.

In some optional examples, the sum of the data volumes of the plurality of fourth subdata is greater than the target data volume.

The second check operation module 1320 includes:
a fifth determining submodule, configured to determine valid subdata in a last one in the plurality of fourth subdata obtained by the first reading module 1310 based on the target data volume recorded by the recording module 1350 and the second bus bit width determined by the fourth determining submodule;
a sixth determining submodule, configured to determine fifth subdata of which a data volume is the first bus bit width or the second bus bit width based on the valid subdata determined by the fifth determining submodule; and
a fourth check operation submodule, configured to perform the predetermined check operation based on other fourth subdata except the last one in the plurality of fourth subdata obtained by the first reading module 1310 and the fifth subdata determined by the sixth determining submodule, to obtain the third check code corresponding to the first to-be-protected data.

In some optional examples, a first check calculation component supporting the first bus bit width and a second check calculation component supporting the second bus bit width are instantiated in the second module.

The fourth check operation module includes:
a first check operation unit, configured to perform, in response to that a data volume of the fifth subdata determined by the sixth determining submodule is the second bus bit width, the predetermined check operation by using the second check calculation component based on the other fourth subdata except the last one in the plurality of fourth subdata obtained by the first reading module 1310 and the fifth subdata determined by the sixth determining submodule, to obtain the third check code corresponding to the first to-be-protected data; and
a second check operation unit, configured to perform, in response to that the data volume of the fifth subdata determined by the sixth determining submodule is the first bus bit width, the predetermined check operation by using the second check calculation component based on the other fourth subdata except the last one in the plurality of fourth subdata obtained by the first reading module 1310, to obtain first intermediate check code, and perform the predetermined check operation by using the first check calculation component based on the fifth subdata determined by the sixth determining submodule and the first intermediate check code, to obtain the third check code corresponding to the first to-be-protected data.

In some optional examples, the sixth determining submodule includes:
a first update unit, configured to update, in response to that a data volume of the valid subdata determined by the fifth determining submodule is greater than the first bus bit width and is less than the second bus bit width, the valid subdata determined by the fifth determining submodule according to a first preset data padding rule, to obtain the fifth subdata of which the data volume is the second bus bit width; and
a second update unit, configured to update, in response to that the data volume of the valid subdata determined by the fifth determining submodule is less than the first bus bit width, the valid subdata determined by the fifth determining submodule according to the first preset data padding rule, to obtain the fifth subdata of which the data volume is the first bus bit width.

In some optional examples, as shown in FIG. 14, the apparatus provided in the embodiments of this disclosure further includes:
a second reading module 1410, configured to read the on-chip memory to obtain a plurality of sixth subdata associated with second to-be-protected data;
a third determining module 1420, configured to respectively determine data priorities for the first to-be-protected data and the second to-be-protected data in response to that it is detected that the first to-be-protected data is to be used by the second module during a process in which the second module in the chip performs the predetermined check operation based on the plurality of sixth subdata;
a first processing module 1430, configured to pause, in response to that it is determined by the third determining module 1420 that the data priority of the first to-be-protected data is higher than that of the second to-be-protected data, the step of performing the predetermined check operation based on the plurality of sixth subdata, record second intermediate check code obtained from the step of performing the predetermined check operation based on the plurality of sixth subdata, and trigger the first reading module 1310, the second check operation module 1320, the second determining module 1330, and the execution module 1340; and
a second processing module 1440, configured to continue to perform the step of performing the predetermined check operation based on the plurality of sixth subdata in response to that it is determined by the third determining module 1420 that the data priority of the first to-be-protected data is lower than that of the second to-be-protected data.

In some optional examples,
the first determining module 1230 is configured to perform an XOR operation between the first check code obtained by the first check operation module 1220 and preset data, to obtain the first data protection reference information; and
the second determining module 1330 is configured to perform an XOR operation between the third check code obtained by the second check operation module 1320 and the preset data, to obtain the second data protection reference information.

In the apparatus in this disclosure, various optional embodiments, optional implementations, and optional examples described above may be flexibly selected and combined according to requirements, so as to implement corresponding functions and effects. These are not enumerated in this disclosure.

### Exemplary electronic device

FIG. 15 is a block diagram of an electronic device according to an embodiment of this disclosure. An electronic device 1500 includes one or more processors 1510 and a memory 1515.

The processor 1510 may be a central processing unit (CPU) or another form of processing unit having a data processing capability and/or an instruction execution capability, and may control another component in the electronic device 1500 to implement a desired function.

The memory 1515 may include one or more computer program products. The computer program product may include various forms of computer readable storage media, such as a volatile memory and/or a non-volatile memory. The volatile memory may include, for example, a random access memory (RAM) and/or a cache. The nonvolatile memory may include, for example, a read-only memory (ROM), a hard disk, and a flash memory. One or more computer program instructions may be stored on the computer readable storage medium. The processor 1510 may execute one or more of the program instructions to implement the method according to various embodiments of this disclosure that are described above and/or other desired functions.

In an example, the electronic device 1500 may further include an input device 1530 and an output device 1540. These components are connected to each other through a bus system and/or another form of connection mechanism (not shown).

The input device 1530 may further include, for example, a keyboard and a mouse.

The output device 1540 may output various information to the outside, and may include, for example, a display, a speaker, a printer, a communication network, and a remote output device connected by the communication network.

Certainly, for simplicity, FIG. 15 shows only some of components in the electronic device 1500 that are related to this disclosure, and components such as a bus and an input/output interface are omitted. In addition, according to specific application situations, the electronic device 1500 may further include any other appropriate components.

Exemplary computer program product and computer readable storage medium

In addition to the foregoing method and device, the embodiments of this disclosure may also relate to a computer program product, which includes computer program instructions. When the instructions are run by a processor, the processor is enabled to perform the steps, of the method according to the embodiments of this disclosure, that are described in the "exemplary method" part of this specification.

The computer program product may be program code, written with one or any combination of a plurality of programming languages, that is configured to perform the operations in the embodiments of this disclosure. The programming languages include an object-oriented programming language such as Java or C++, and further include a conventional procedural programming language such as a "C" language or a similar programming language. The program code may be entirely or partially executed on a user computing device, executed as an independent software package, partially executed on the user computing device and partially executed on a remote computing device, or entirely executed on the remote computing device or a server.

In addition, the embodiments of this disclosure may further relate to a computer readable storage medium, which stores computer program instructions. When the computer program instructions are run by the processor, the processor is enabled to perform the steps, of the method according to the embodiments of this disclosure, that are described in the "exemplary method" part of this specification.

The computer readable storage medium may be one readable medium or any combination of a plurality of readable media. The readable medium may be a readable signal medium or a readable storage medium. The readable storage medium may include, for example, but is not limited to electricity, magnetism, light, electromagnetism, infrared ray, or a semiconductor system, an apparatus, or a device, or any combination of the above. More specific examples (a non-exhaustive list) of the readable storage medium include: an electrical connection with one or more conducting wires, a portable disk, a hard disk, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination of the above.

Basic principles of this disclosure are described above in combination with specific embodiments. However, the advantages, superiorities, and effects mentioned in this disclosure are merely examples but are not for limitation, and it cannot be considered that these advantages, superiorities, and effects are necessary for each embodiment of this disclosure. Specific details described above are merely for examples and for ease of understanding, rather than limitations. The details described above do not limit that this disclosure must be implemented by using the foregoing specific details.

A person skilled in the art may make various modifications and variations to this disclosure without departing from the spirit and the scope of this application. In this way, if these modifications and variations of this application fall within the scope of the claims and equivalent technologies of the claims of this disclosure, this disclosure also intends to include these modifications and variations.

## Claims

1. A data protection method, comprising:
partitioning (110) first to-be-protected data obtained by a chip, to obtain a plurality of first subdata;
performing (120) a predetermined check operation based on the plurality of first subdata, to obtain first check code corresponding to the first to-be-protected data, wherein the predetermined check operation is used for obtaining check code with a preset data volume for to-be-checked data with any data volume;
determining (130) first data protection reference information associated with the first check code; and
storing (140) the first to-be-protected data and the first data protection reference information into an on-chip memory of the chip.

2. The method according to claim 1, wherein the performing (120) a predetermined check operation based on the plurality of first subdata, to obtain first check code corresponding to the first to-be-protected data comprises:
performing position flipping on the plurality of first subdata respectively, to obtain a plurality of second subdata;
performing cyclic redundancy check operations on the plurality of second subdata by using a preset first cyclic redundancy polynomial, to obtain the first check code corresponding to the first to-be-protected data; and
the determining (130) first data protection reference information associated with the first check code comprises:
performing (1301) position flipping on the first check code to obtain second check code; and
determining (1303) the first data protection reference information based on the second check code.

3. The method according to claim 1, wherein the performing (120) a predetermined check operation based on the plurality of first subdata, to obtain first check code corresponding to the first to-be-protected data comprises:
performing (1201) position flipping on the preset first cyclic redundancy polynomial to obtain a second cyclic redundancy polynomial; and
performing (1203) cyclic redundancy check operations on the plurality of first subdata by using the second cyclic redundancy polynomial, to obtain the first check code corresponding to the first to-be-protected data.

4. The method according to claim 1, wherein the performing (120) a predetermined check operation based on the plurality of first subdata, to obtain first check code corresponding to the first to-be-protected data comprises:
determining (1211) a first bus bit width corresponding to a first module in the chip that generates the first to-be-protected data;
in response to that a sum of data volumes of the plurality of first subdata is a non-integer multiple of the first bus bit width, updating (1213) the plurality of first subdata according to a first preset data padding rule, to obtain a plurality of third subdata of which a sum of data volumes is an integer multiple of the first bus bit width; and
performing (1215) a predetermined check operation based on the plurality of third subdata, to obtain the first check code corresponding to the first to-be-protected data.

5. The method according to any one of the claims 1 to 4, further comprising:
reading (710) the on-chip memory to obtain a plurality of fourth subdata associated with the first to-be-protected data;
performing (720) the predetermined check operation based on the plurality of fourth subdata, to obtain third check code corresponding to the first to-be-protected data;
determining (730) second data protection reference information associated with the third check code; and
performing (740) a preset data protection operation on the first to-be-protected data based on the first data protection reference information and the second data protection reference information.

6. The method according to claim 5, wherein the storing the first to-be-protected data into an on-chip memory of the chip comprises:
determining (1401) a first bus bit width corresponding to a first module in the chip that generates the first to-be-protected data;
updating (1403) the first to-be-protected data according to a second preset data padding rule, to obtain updated data of which a data volume is an integer multiple of the first bus bit width; and
storing (1405) the updated data comprising the first to-be-protected data into the on-chip memory of the chip.

7. The method according to claim 6, wherein
the method further comprises:
recording (910) a target data volume of the first to-be-protected data; and
the reading the on-chip memory to obtain a plurality of fourth subdata associated with the first to-be-protected data comprises:
determining (7101) a second bus bit width corresponding to a second module in the chip that is to use the first to-be-protected data; and
reading (7103) the updated data in the on-chip memory based on the second bus bit width, until a plurality of fourth subdata of which a sum of data volumes is greater than or equal to the target data volume are obtained.

8. The method according to claim 7, wherein the sum of the data volumes of the plurality of fourth subdata is greater than the target data volume; and
the performing the predetermined check operation based on the plurality of fourth subdata, to obtain third check code corresponding to the first to-be-protected data comprises:
determining (7201) valid subdata in a last one in the plurality of fourth subdata based on the target data volume and the second bus bit width;
determining (7203) fifth subdata of which a data volume is the first bus bit width or the second bus bit width based on the valid subdata; and
performing (7205) the predetermined check operation based on other fourth subdata except the last one in the plurality of fourth subdata and the fifth subdata, to obtain the third check code corresponding to the first to-be-protected data.

9. The method according to claim 8, wherein a first check calculation component supporting the first bus bit width and a second check calculation component supporting the second bus bit width are instantiated in the second module; and
the performing (7205) the predetermined check operation based on the other fourth subdata except the last one in the plurality of fourth subdata and the fifth subdata, to obtain the third check code corresponding to the first to-be-protected data comprises:
in response to that a data volume of the fifth subdata is the second bus bit width, performing the predetermined check operation by using the second check calculation component based on the other fourth subdata except the last one in the plurality of fourth subdata and the fifth subdata, to obtain the third check code corresponding to the first to-be-protected data; and
in response to that the data volume of the fifth subdata is the first bus bit width, performing the predetermined check operation by using the second check calculation component based on the other fourth subdata except the last one in the plurality of fourth subdata, to obtain first intermediate check code, and performing the predetermined check operation by using the first check calculation component based on the fifth subdata and the first intermediate check code, to obtain the third check code corresponding to the first to-be-protected data.

10. The method according to claim 8 or 9, wherein the determining fifth subdata of which a data volume is the first bus bit width or the second bus bit width based on the valid subdata comprises:
in response to that a data volume of the valid subdata is greater than the first bus bit width and is less than the second bus bit width, updating the valid subdata according to a first preset data padding rule, to obtain the fifth subdata of which the data volume is the second bus bit width; and
in response to that the data volume of the valid subdata is less than the first bus bit width, updating the valid subdata according to the first preset data padding rule, to obtain the fifth subdata of which the data volume is the first bus bit width.

11. The method according to claim 5 or any of the claims 6 to 10 as far as referring back to claim 5, further comprising:
reading (1110) the on-chip memory to obtain a plurality of sixth subdata associated with second to-be-protected data;
determining (1120) data priorities for the first to-be-protected data and the second to-be-protected data in response to that it is detected that the first to-be-protected data is to be used by the second module during a process in which the second module in the chip performs the predetermined check operation based on the plurality of sixth subdata;
in response to that the data priority of the first to-be-protected data is higher than that of the second to-be-protected data, pausing (1130) the step of performing the predetermined check operation based on the plurality of sixth subdata, recording second intermediate check code obtained from the step of performing the predetermined check operation based on the plurality of sixth subdata, and performing the step of reading the on-chip memory to obtain a plurality of fourth subdata associated with the first to-be-protected data to the step of performing the preset data protection operation on the first to-be-protected data based on the first data protection reference information and the second data protection reference information; and
in response to that the data priority of the first to-be-protected data is lower than that of the second to-be-protected data, continuing (1140) to perform the step of performing the predetermined check operation based on the plurality of sixth subdata.

12. The method according to claim 5 or any of the claims 6 to 10 as far as referring back to claim 5, wherein the determining first data protection reference information associated with the first check code comprises:
performing an XOR operation between the first check code and preset data, to obtain the first data protection reference information; and
the determining second data protection reference information associated with the third check code comprises:
performing an XOR operation between the third check code and the preset data, to obtain the second data protection reference information.

13. A data protection apparatus, comprising:
a data partitioning module (1210), configured to partition first to-be-protected data obtained by a chip, to obtain a plurality of first subdata;
a first check operation module (1220), configured to perform a predetermined check operation based on the plurality of first subdata obtained by the data partitioning module, to obtain first check code corresponding to the first to-be-protected data, wherein the predetermined check operation is used for obtaining check code with a preset data volume for to-be-checked data with any data volume;
a first determining module (1230), configured to determine first data protection reference information associated with the first check code obtained by the first check operation module; and
a storage module (1240), configured to store the first to-be-protected data and the first data protection reference information that is determined by the first determining module into an on-chip memory of the chip.

14. A computer readable storage medium, wherein the storage medium stores a computer program, and the computer program is used for implementing the data protection method according to any one of claims 1 to 12.

15. An electronic device, wherein the electronic device comprises:
a processor; and
a memory, configured to store a processor-executable instruction, wherein
the processor is configured to read the executable instruction from the memory, and execute the instruction to implement the data protection method according to any one of claims 1 to 12.
